# NEUE EUROPÄISCHE PATENTSCHRIFT

(11) **EP 1 669 017 B2**
(45) Veröffentlichungstag und Bekanntmachung des Hinweises auf die Entscheidung über den Einspruch: **30.11.2011**
(45) Hinweis auf die Patenterteilung: 20.05.2009
(21) Anmeldenummer: 05023106.7
(22) Anmeldetag: 22.10.2005
(51) Int. Cl.: A47L 15/42, A47L 15/46, A47L 15/00

(54) **Verfahren zum Betrieb einer Geschirrspülmaschine**
Method for operating a dishwasher
Procédé d'exploitation d'un lave-vaisselle

(30) Priorität: 11.12.2004 DE 102004059722
(43) Veröffentlichungstag der Anmeldung: 14.06.2006
(73) Patentinhaber: Electrolux Home Products Corporation N.V., 1130 Brussels (BE)
(72) Erfinder: Steiner, Winfried, 90491 Nürnberg (DE); Kohles, Karlheinz, 90461 Nürnberg (DE); Stahlmann, Rolf, 91639 Wolframs-Eschenbach (DE); Füglein, Stefan, 90427Nürnberg (DE); Forst, Klaus-Martin, 90513 Zirndorf (DE)
(74) Vertreter: Röder, Richard

(56) Entgegenhaltungen:
- EP-A- 0 659 381
- EP-A- 1 029 496
- EP-A1- 1 219 228
- EP-A1- 1 669 017
- DE-A1- 19 750 266
- DE-A1- 19 845 338
- US-A- 5 017 852

## Beschreibung

Die Erfindung betrifft ein Verfahren zum Betrieb einer Geschirrspülmaschine umfassend wenigstens eine Sprüheinrichtung, der über eine Umwälzpumpe eine sich in einem Pumpensumpf sammelnde Flüssigkeit zugeführt wird, wobei die Umwälzpumpe innerhalb eines Arbeitszyklus intermittierend in einem ersten Zeitraum mit niedriger und in einem zweiten Zeitraum mit hoher Drehzahl betrieben wird, wobei während eines Arbeitszyklus der Flüssigkeitsstand im Pumpensumpf drehzahlabhängig zwischen einem hohen Stand, und einem niedrigen Stand; variiert.

Ein solches Betriebsverfahren für eine Geschirrspülmaschine ist beispielsweise aus EP 0 659 381 B1 bekannt. Die Umwälzpumpe wird abwechselnd mit hoher und niedriger Drehzahl betrieben. Während der Betriebsphase mit hoher Drehzahl wird die Spülflüssigkeit mit hohem Druck aus der Sprüheinrichtung, beispielsweise einem rotierenden Sprüharm, auf das Spülgut gespritzt. Der Füllstand der Spülflüssigkeit im Pumpensumpf nimmt deutlich ab. Mit Erreichen eines unteren Niveaus, das im Wesentlichen dem untersten Ansaugniveau der Umwälzpumpe entspricht, wird die Drehzahl reduziert, bevorzugt auf eine Drehzahl, bei der wenn überhaupt nur noch wenig Wasser aus der Sprüheinrichtung läuft, wobei aber in jedem Fall sichergestellt sein sollte, dass der Sprüharm und die Flüssigkeitszufuhrleitung während dieser Phase nicht leer läuft. Während dieser Phase mit niedriger Drehzahl sammelt sich erneut die vom Spülgut herabtropfende Spülflüssigkeit im Pumpensumpf, wobei nach Erreichen eines hinreichenden Füllniveaus die Drehzahl wieder abrupt erhöht wird und Wasser mit hohem Druck gespritzt wird. Der Vorteil dieses Verfahrens liegt darin, dass während des Betriebs mit der niedrigen Pumpendrehzahl und damit geringem aufgebauten Druck Spülflüssigkeit im Pumpensumpf gesammelt wird, die für den Betrieb der Pumpe mit hoher Drehzahl, wenn also hoher Druck erzeugt wird, verwendet werden kann. Die Menge der Umlaufflüssigkeit ist dabei geringer, als wenn die Umwälzpumpe konstant mit einer bestimmten Drehzahl betrieben wird. Der während der Phase mit hoher Drehzahl aufgebaute Sprühdruck kann deutlich höher eingestellt werden als bei einem Konstantbetrieb. Der Reinigungseffekt wird hierdurch verbessert. Die Sprühzeiträume für den hohen und niedrigen Druck, also die hohe niedrige Drehzahl orientieren sich an dem zeitlichen Verhalten für das Absenken und Ansteigen des Flüssigkeitsniveaus im Pumpensumpf sowie an den vorbestimmten oberen und unteren Grenzen des Füllstandniveaus.

Der Betrieb der Umwälzpumpe mit der niedrigen Drehzahl und damit dem niedrigen erzeugten Druck ist erforderlich, damit sich im Pumpensumpf eine ausreichende Flüssigkeitsmenge ansammelt, um während der Phase mit hoher Drehzahl das vorbestimmte untere Flüssigkeitsniveau im Pumpensumpf nicht zu unterschreiten, so dass die Pumpe nicht versehentlich Luft ansaugt. Durch die Absenkung des Pumpendrucks, und damit Einhergehen der Pumpendrehzähl, wird aber nicht nur der Durchfluss reduziert, sondern auch die Steighöhe/Strahllänge der Sprühstrahlen und somit auch die Reichweite für die Benetzung/Reinigung der Geschirrteile in dieser Phase. Die Drehzahl in EP 0 659 381 B1 wird wie beschrieben so eingestellt, dass bevorzugt während dieser Phase überhaupt keine Sprühflüssigkeit abgegeben wird.

Der Erfindung liegt das Problem zugrunde, ein Verfahren anzugeben, das trotz intermittierendem Pumpenbetrieb auch in einer Phase mit reduzierter Drehzahl einen guten Reinigungseffekt ermöglicht.

Diese Aufgabe wird gelöst durch die Merkmale des Anspruch 1.

Erfindungsgemäß wird zwischen dem Betrieb der Umwälzpumpe mit hoher Drehzahl und damit hohem Druck und niedriger Drehzahl und damit niedrigem Druck eine zusätzliche Phase, nämlich der dritte Zeitraum eingefügt, in welcher bzw. welchem die Pumpe mit einer Drehzahl betrieben wird und damit einen Flüssigkeitsdruck erzeugt, die oder der zwischen den oberen und unteren Drehzahlen bzw. dem oberen und unteren zugeordneten Drucken liegt. Der Drehzahlbereich, innerhalb dem diese "Zwischendrehzahl" variiert bzw. in den sie gelegt werden kann, kann dem vorbestimmten oberen und unteren Flüssigkeitsniveau im Pumpensumpf zugeordnet sein, dies ist aber nicht zwingend notwendig. Durch das Einfügen der Zwischenphase wird die gesamte Periodendauer um mindestens die Zeit verlängert, die für das Sammeln von Flüssigkeit im Pumpensumpf bis zur Erreichung des oberen Niveaus erforderlich ist. Mit dem Einfügen dieser dritten Phase wird vorteilhaft sichergestellt, dass damit auch in einer Zwischenphase zwischen den beiden Hochdruck- und Niederdruckphasen eine hinreichende Benetzung und Umspülung der zu reinigenden Geschirrteile mit dem von der Sprüheinrichtung mit beachtlichem Druck abgegebenen Reinigungsflüssigkeit erreicht wird. Es kann also durch die in einem Arbeitszyklus erfindungsgemäß realisierte Erhöhung des spezifischen Drucks eine Erhöhung und Verbesserung der Sprühmechanik erreicht werden.

Die Drehzahl wird gemäß der Erfindung im dritten Zeitraum zumindest zeitweise im Wesentlichen konstant gehalten werden. In einem solchen Fall wird sie derart gewählt werden, dass der Füllstand im Pumpensumpf auf einem im Wesentlichen konstanten Niveau bleibt, das heißt, der über die gegenüber der niedrigen Drehzahl im ersten Zeitraum höhere Drehzahl resultierende Flüssigkeitsabzug entspricht im Wesentlichen dem Nachfluss.

Alternativ kann nach einer nicht beanspruchten Ausführungsform die Drehzahl im dritten Zeitraum zumindest zeitweise auch stetig variiert werden, insbesondere erniedrigt werden, wobei hier jedwede kontinuierliche Drehzahlveränderung möglich ist, beispielsweise linear, exponentiell, logarithmisch oder polynom. Die Art und weise, wie die Drehzahlführung sowohl bei konstant gehaltener Drehzahl als auch bei variierter Drehzahl letztendlich gewählt wird, wie auch die Dauer der jeweiligen Phase hängt letztlich vom zeitlichen Verhalten des Absinkens und Ansteigens des Flüssigkeitsniveaus im Pumpensumpf ab.

wie beschrieben kann der zweite Zeitraum dem dritten Zeitraum vor- oder nachgeschaltet sein. Im Falle, dass der zweite Zeitraum vorgeschaltet ist, kann die Drehzahl von der gegenüber dem zweiten Zeitraum erniedrigten Drehzahl auf die erhöhte Drehzahl des zweiten Zeitraums abrupt erhöht werden. Wird beispielsweise im vorgeschalteten dritten Zeitraum über eine bestimmte Zeit mit konstanter höherer Drehzahl gefahren, so wird diese höhere Drehzahl abrupt auf die hohe Drehzahl des zweiten Zeitraums angehoben. Entsprechendes gilt, wenn die Drehzahl im zweiten Zeitraum beispielsweise stetig erhöht wird, am Ende des dritten Zeitraums erfolgt dann in jedem Fall ein Drehzahlsprung auf die hohe Drehzahl des zweiten Zeitraums.

Umgekehrt sind die Verhältnisse im Falle eines dem zweiten Zeitraum nachgeschalteten dritten Zeitraums. Hier erfolgt eine abrupte Erniedrigung der hohen Drehzahl des zweiten Zeitraums auf eine demgegenüber erniedrigte Drehzahl des dritten Zeitraums, die dann konstant gehalten oder beispielsweise stetig reduziert werden kann.

Denkbar ist es des weiteren, innerhalb des dritten Zeitraums mit zwei unterschiedlichen, bevorzugt konstanten Drehzahlphasen bzw. Druckphasen zu arbeiten. Zu diesem Zweck kann der dritte Zeitraum eine erste Phase, in der die Umwälzpumpe mit einer niedrigen Drehzahl, vorzugsweise einer der niedrigen Drehzahl des ersten Zeitraums entsprechenden Drehzahl, und eine zweite Phase mit einer demgegenüber erhöhten Drehzahl umfassen. Dabei kann, je nach Ausgestaltung bzw. Abfolge der einzelnen Zeiträume hintereinander, die erste Phase mit niedriger Drehzahl vor oder nach der zweiten Phase mit höherer Drehzahl liegen.

Neben dem erfindungsgemäßen Verfahren betrifft die Erfindung ferner eine Geschirrspülmaschine, ausgebildet zur Durchführung des beschriebenen Verfahrens.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine Prinzipdarstellung einer erfindungsgemäßen Geschirrspülmaschine als Teilansicht,
- Fig. 2: ein Diagramm eines Drehzahlverlaufs einer ersten erfindungsgemäßen Ausführungsform,
- Fig. 3: den entsprechenden Verlauf des Flüssigkeitsstandes,
- Fig. 4: einen Drehzahlverlauf einer nicht beanspruchten zweiten Ausführungsform,
- Fig. 5: den entsprechenden Füllstandsverlauf,
- Fig. 6: einen Drehzahlverlauf einer erfindungsgemäßen dritten Ausführungsform,
- Fig. 7: den entsprechenden Füllstandsverlauf, und
- Fig. 8: einen Drehzahlverlauf einer erfindungsgemäßen vierten Ausführungsform.

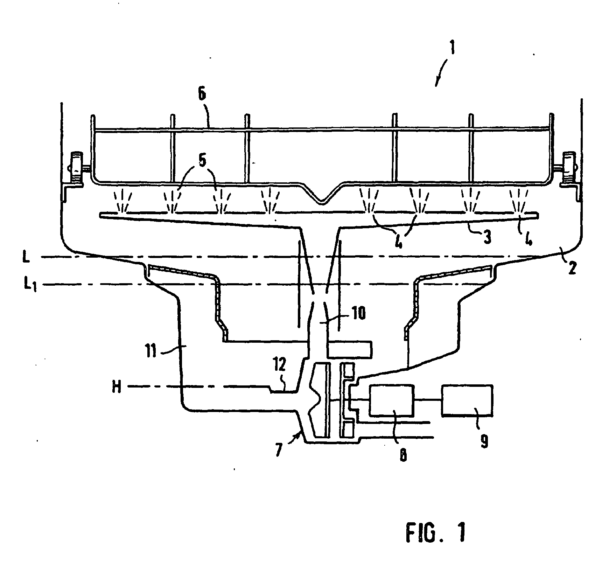

Fig. 1 zeigt in Form einer Teilansicht eine erfindungsgemäße Geschirrspülmaschine 1, wobei der Aufbau einer solchen Geschirrspülmaschine grundsätzlich bekannt ist. Sie umfasst einen Spülbehälter 2, in dem eine Sprüheinrichtung umfassend mindestens einen Sprüharm 3, der sich in einer im Wesentlichen waagrechten Ebene aufgrund einer hydraulischen Reaktion beim Zuführen der Spülflüssigkeit dreht. Der sich drehende Sprüharm 3 weist eine Vielzahl von Düsen 4 auf, über die Spülflüssigkeit 5 auf das in einem Korb 6 angeordnete Spülgut gespritzt werden kann. Hierfür ist eine Umwälzpumpe 7 vorgesehen, vorzugsweise in Form einer Kreiselpumpe, die durch einen Elektromotor 8, der mit einer Programmsteuereinrichtung 9 zusammenwirkt, angetrieben wird. Die von der Umwälzpumpe 7 angesaugte Flüssigkeit wird unter Druck über eine Versorgungsleitung 10 dem Sprüharm 3 zugeführt.

Die Spülflüssigkeit sammelt sich in einem Pumpensumpf 11 des Behälters 2. Ein unterstes Füllstandniveau H ist über die Lage der Ansaugordnung 12 der Pumpe definiert. Der Flüssigkeitsfüllstand sollte dieses unterste Niveau H nicht unterschreiten, da die Pumpe Luft saugen würde. Ferner ist in Fig. 1 ein oberes Niveau L gezeigt, das das maximale Füllniveau darstellt, der beim Zulauf der Sprühflüssigkeit vor Beginn des eigentlichen Spülzyklus erreicht werden kann.

Ferner ist ein Niveau L1 gezeigt, das kleiner als das maximale Füllniveau L ist. Während das Niveau L den maximalen Wasserstand im statischen Fall, wenn also nicht gereinigt wird, angibt, zeigt das Niveau L1 das maximale Flüssigkeitsniveau, das sich im dynamischen Sprühbetrieb einstellt. Dass dieses Niveau unterhalb des L-Niveaus liegt, hängt damit zusammen, dass während des Betriebs in der Regel die versorgungsleitung 10 wie auch der Sprüharm 3 mit Flüssigkeit gefüllt ist bzw. daraus auch in der dynamischen Füllphase Flüssigkeit abgegeben wird, so dass sich das maximale L-Niveau im Betriebsfall nicht einstellt. Während des Reinigungsbetriebes pendelt das Flüssigkeitsniveau zwischen dem H-Niveau und dem L1-Niveau.

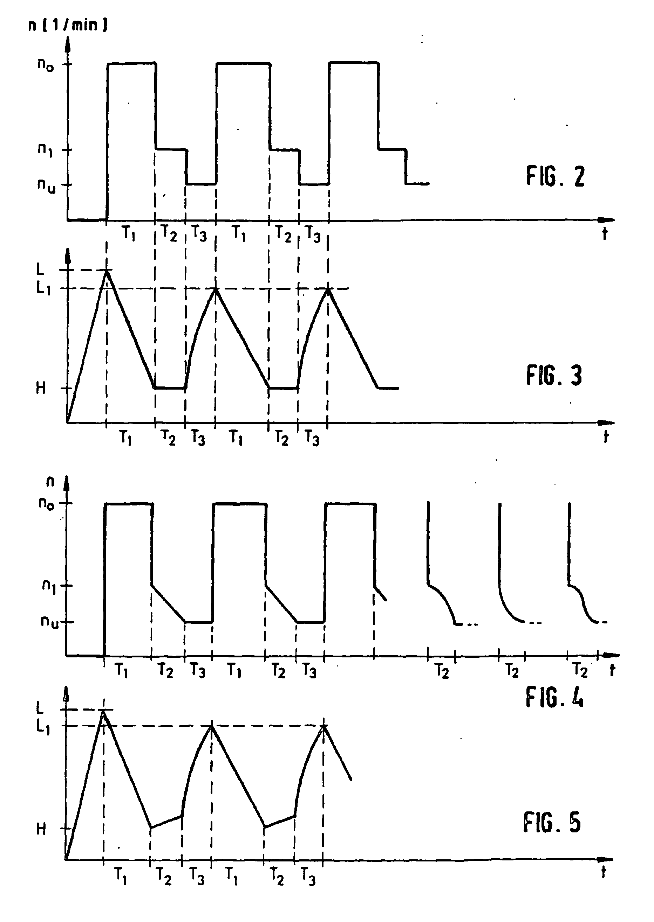

Fig. 2 zeigt in Form einer Prinzipdarstellung den Drehzahlverlauf der Umwälzpumpe 7. Es handelt sich - wie bei allen nachfolgenden Darstellungen - um idealisierte Darstellungen. Die jeweiligen Drehzahl- und Füllstandsverläufe stellen sich im Betrieb nicht derart exakt bzw. sprunghaft ein. Eine Drehzahländerung wird im Falle der Umwälzpumpe in der Regel durch Anregen bzw. Entregen, nicht aber durch aktives Bremsen erzielt, weshalb sich die idealisiert gezeigten Sprungfunktionen der Drehzahl nicht exakt so ergeben. Auch die jeweiligen Füllstände stellen sich etwas zeitversetzt ein, aus Erklärungsgründen wird jedoch ein entsprechender Bezug zum Drehzahlverlauf dargestellt. Dem Fachmann, dem die Verhältnisse im Rahmen des Umwälzpumpenbetriebs wie auch des Zu- und Ablaufens der Spülflüssigkeit bekannt sind, werden anhand der nachfolgenden Beschreibung die erfindungsgemäßen Vorteile jedoch ohne weiteres offenbar.

In Fig. 2 ist längs der Abszisse die Zeit t und längs der Ordinate die Drehzahl n der Umwälzpumpe aufgetragen. Längs der Drehzahlachse sind drei Stufen gezeigt, nämlich zum einen eine untere Drehzahl nᵤ, eine obere Drehzahl nₒ sowie eine dazwischenliegende Drehzahl n₁.

Zu Beginn des Betriebs läuft, siehe Fig. 3, zunächst Wasser zu, die Umwälzpumpe arbeitet nicht, die Drehzahl ist Null. wird über einen geeigneten Füllstandssensor erfasst, dass das maximale Zulaufniveau L erreicht ist, wird über die Programmsteuereinrichtung 9 der Zulauf gestoppt und die Pumpe angesteuert. Die Drehzahl wird abrupt auf die obere Drehzahl nₒ erhöht und für eine bestimmte Zeitspanne T₁ auf dieser Drehzahl gehalten. Diese Zeitspanne kann beispielsweise 0,8 - 1 Sekunden betragen. Anschließend wird die Drehzahl abrupt auf die Zwischendrehzahl n₁ reduziert und für die Zeitdauer T₂ konstant gehalten. Zum Ende dieses Zeitraums wird die Drehzahl auf die untere Drehzahl nᵤ reduziert. Nach Ablauf des Zeitraums T₃ erfolgt wiederum die abrupte Erhöhung auf die obere Drehzahl und sofort.

In Fig. 3 ist der entsprechende Füllstandsverlauf in idealisierter Form dargestellt. Wie beschrieben läuft zunächst der Pumpensumpf 11 auf das maximale Füllniveau L voll. Anschließend ergibt sich mit dem Zuschalten der Umwälzpumpe und der hohen Drehzahl ein schneller Füllstandsabfall auf das untere Niveau H bzw. in dessen Nähe. Im Zeitraum T₂ bleibt das Füllstands-Niveau durch entsprechende Wahl der Drehzahl n₁ im Wesentlichen konstant. Gleichwohl kann in dem Zeitraum T₂ die Spülflüssigkeit mit hinreichendem Druck auch bis in die oberen Korbbereiche und damit an dort befindliches Spülgut gebracht werden, so dass dieses benetzt und mechanisch bearbeitet wird.

Mit der Reduzierung der Drehzahl zu Beginn des Zeitraums T₃ stellt sich, nachdem hier kaum Wasser abgezogen wird, ein rascher Füllstandsanstieg auf das Niveau L₁ ein. Die Drehzahl nᵤ ist so bemessen, dass die Versorgungsleitungen der Sprüharme etc. auf jeden Fall mit Flüssigkeit gefüllt bleiben, gegebenenfalls spritzt noch etwas Spülflüssigkeit aus den Düsen. Ein kraftvoller Reinigungseffekt, wie in den Zeiträumen T₁ und T₂ ist hier aber nicht mehr gegeben, nachdem dieser Zeitraum bzw. diese Phase im Arbeitszyklus ausschließlich der dynamischen Sumpfbefüllung dient.

Ersichtlich können im vorliegenden Beispiel drei einen Arbeitszyklus bildende Zeiträume unterschieden werden. Zum einen ein erster Zeitraum T₃, bei dem mit niedriger Drehzahl gefahren wird, und der die dynamische Sumpfbefüllung darstellt. Daneben der zweite Zeitraum T₁, bei dem mit der höchsten Drehzahl gearbeitet wird, wo also die Spülflüssigkeit unter hohem Druck auf das Spülgut gespritzt wird. Und schließlich der dritte Zeitraum T₂, bei dem mit einer etwas erniedrigten Drehzahl gearbeitet wird, die immer noch eine hinreichende Reinigungswirkung ermöglicht.

Fig. 4 zeigt eine nicht beanspruchte etwas abgewandelte Ausführungsform eines Drehzahlprofils im Vergleich zu Fig. 2. Auch hier sind die einen Arbeitszyklus bildenden Zeiträume T₁, T₂ und T₃ vorgesehen, jedoch wird während des Zeitraums T₂ die Drehzahl nicht wie in Fig. 2 konstant gehalten, sondern stetig reduziert. Dies zeigt sich im Füllstandsdiagramm darin, dass während des Zeitraums T₂ der Füllstand etwas ansteigt, das heißt, es läuft von oben mehr Flüssigkeit herab, als über die immer noch mit höherer Drehzahl im Vergleich zum untersten Drehzahlniveau betriebenen Umwälzpumpe abgezogen wird. Erst mit Erreichen des Zeitraums T₃ setzt die dynamische schnelle Befüllung wieder ein.

Während Fig. 4 im linken Diagrammteil eine lineare Drehzahlreduzierung zeigt, sind in Fig. 4 rechts exemplarisch drei weitere Möglichkeiten der Drehzahlreduzierung im dritten Zeitraum T₂ dargestellt. Die linke der drei Einzeldarstellungen zeigt einen exponentiellen Drehzahlabfall, die mittlere einen logarithmischen und die rechte Einzeldarstellung einen polynomischen Drehzahlabfall. Die konkrete Wahl des Drehzahlverlaufs richtet sich wie bereits einleitend beschrieben insbesondere nach dem zeitlichen Zu- und Ablaufverhalten der Spülflüssigkeit. Hiernach richtet sich letztlich auch die konkrete Länge eines Arbeitszyklus, das heißt die letztendliche Bemessung der Zeiträume T₁, T₂ und T₃. In jedem Fall muss sichergestellt sein, dass bei einem dem zweiten Zeitraum vorgeschalteten ersten Zeitraum T₃, in welchem die Spülflüssigkeit sich ansammelt, diese möglichst vollständig zurückläuft.

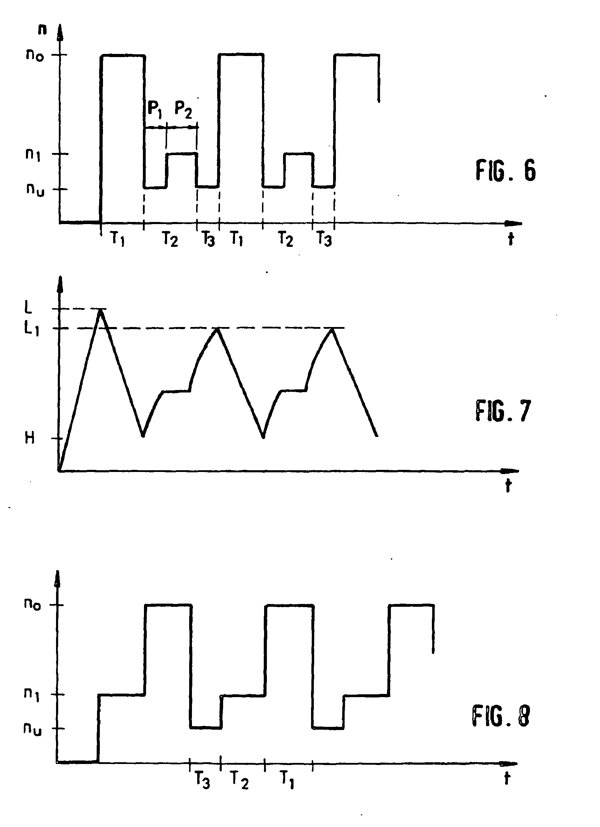

Fig. 6 zeigt einen Drehzahlverlauf, bei dem ebenfalls pro Arbeitszyklus die drei Zeiträume T₁, T₂ und T₃ vorgesehen sind. Hier jedoch setzt sich der Zeitraum T₂ aus zwei Phasen P₁ und P₂ zusammen. Während der Phase P₁ ist die Drehzahl konstant, sie liegt im gezeigten Beispiel auf dem unteren Drehzahlniveau nᵤ und damit unterhalb der während der Phase P₂ angehobenen Drehzahl n₁. Das Verhältnis der Zeiten für die unterschiedlichen Drehzahlphasen P₁ und P₂ und damit die unterschiedlichen, während der Drehzahlphasen aufgebauten Drücke orientiert sich auch hier am zeitlichen Verhalten für das Absenken und Ansteigen des Flüssigkeitsniveaus im Pumpensumpf. Die erste Phase P₁ dient dem Stabilisieren auf dem unteren Füllstandsniveau H, die zweite Phase P₂ dient dem Erreichen eines konstanten Niveaus, das unterhalb dem oberen Niveau L₁ liegt.

Dies zeigt sich auch im exemplarisch gezeigten Füllstandsverlauf. Ersichtlich läuft der Pumpensumpf zunächst bis zum Niveau L voll, anschließend wird mit hoher Drehzahl abgepumpt, wonach zu Beginn der Phase P₁ das unterste Füllstandsniveau H erreicht ist, das langsam wieder überschritten wird, bis zur Phase P₂ das Füllstandsniveau im Wesentlichen konstant gehalten wird, nachdem wie beschrieben die Drehzahl n₁ bevorzugt so gewählt wird, dass der Zulauf dem Ablauf entspricht. Während der Phase P₂ wird ersichtlich ebenfalls mit deutlich höher Drehzahl und deutlich höherem Druck gearbeitet, so dass sich auch bei diesem Drehzahlverlauf eine verbesserte Reinigungswirkung ergibt.

Schließlich zeigt Fig. 8 einen Drehzahlverlauf, bei dem der dritte Zeitraum T₂ dem zweiten Zeitraum T₁ mit hoher Drehzahl vorgeschalten ist. Der Füllstandsverlauf ergibt sich entsprechend, hierauf muss nicht mehr näher eingegangen werden.

## Patentansprüche

1. Verfahren zum Betrieb einer Geschirrspülmaschine (1) umfassend wenigstens eine Sprüheinrichtung, der über eine Umwälzpumpe (7) eine sich in einem Pumpensumpf sammelnde Flüssigkeit zugeführt wird, wobei die Umwälzpumpe (7) innerhalb eines Arbeitszyklus intermittierend in einem ersten Zeitraum (T₃) mit niedriger und in einem zweiten Zeitraum (T₁) mit hoher Drehzahl betrieben wird, wobei während eines Arbeitszyklus der Flüssigkeitsstand im Pumpensumpf (11) drehzahlabhängig zwischen einem hohen Stand und einem niedrigen Stand variiert,
wobei die Umwälzpumpe innerhalb eines Arbeitszyklus in einem dem zweiten Zeitraum (T₁) vor- oder nachgeschalteten dritten Zeitraum (T₂), der zwischen dem Betrieb der Umwälzpumpe mit hoher Drehzahl (nₒ) und damit hohem Druck und niedriger Drehzahl (nᵤ) und damit niedrigem Druck eingefügt wird, mit wenigstens einer Drehzahl (n₁), die kleiner als die hohe Drehzahl (nₒ) im zweiten Zeitraum (T₁), aber größer als die niedrige Drehzahl (nᵤ) im ersten Zeitraum (T₃) ist, betrieben wird und damit einen Flüssigkeitsdruck erzeugt, der zwischen dem oberen und unteren zugeordneten Druck liegt, und
wobei die Drehzahl (n₁) im dritten Zeitraum (T₂) zumindest zeitweise im Wesentlichen konstant gehalten wird,
**dadurch gekennzeichnet, dass**
die konstant gehaltene Drehzahl (n₁) im dritten Zeitraum (T₂) derart gewählt ist, dass der Füllstand im Pumpensumpf (11) auf einem im Wesentlichen konstanten Niveau bleibt.

2. Verfahren nach Anspruch 1, **dadurch gekennzeichnet, dass** bei einem dem zweiten Zeitraum (T₁) vorgeschalteten dritten Zeitraum (T₂) die Drehzahl von der gegenüber dem zweiten Zeitraum erniedrigten Drehzahl (n₁) auf die erhöhte Drehzahl (nₒ) des zweiten Zeitraums (T₁) abrupt erhöht wird.

3. Verfahren nach Anspruch 1 oder 2, **dadurch gekennzeichnet, dass** bei einem dem zweiten Zeitraum (T₁) nachgeschalteten dritten Zeitraum (T₂) die Drehzahl von der erhöhten Drehzahl (nₒ) des zweiten Zeitraums (T₁) abrupt auf die gegenüber dem zweiten Zeitraum (T₁) erniedrigte Drehzahl (n₁) des dritten Zeitraums (T₂) reduziert wird.

4. Verfahren nach Anspruch 1, **dadurch gekennzeichnet, dass** der dritte Zeitraum (T₂) eine erste Phase (P₁), in der die Umwälzpumpe (7) mit einer niedrigen Drehzahl, vorzugsweise einer der niedrigen Drehzahl (nᵤ) des ersten Zeitraums (T₃) entsprechenden Drehzahl, und eine zweite Phase (P₂) mit einer demgegenüber erhöhten Drehzahl umfasst.

5. Geschirrspülmaschine (1) umfassend wenigstens eine Sprüheinrichtung (3), der über eine Umwälzpumpe (7), die durch einen Elektromotor (8) angetrieben wird, eine sich in einem Pumpensumpf sammelnde Flüssigkeit zugeführt wird, **gekennzeichnet durch** eine, zur Durchführung des Verfahrens nach einem der Ansprüche 1 bis 4, ausgebildete Programmsteuereinrichtung (9), die mit dem Elektromotor (8) zusammenwirkt.

## Claims

1. Process for operating a dishwasher (1) comprising at least one spraying device, to which a liquid being collected in a pump sump is supplied via a circulating pump (7), wherein the circulating pump (7) is operated within a working cycle intermittently in a first period of time (T₃) at low rotational speed and in a second period of time (T₁) at high rotational speed, wherein during a working cycle, the liquid level in the sump (11) varies as a function of rotational speed between a high level and a low level, wherein the circulating pump is operated within a working cycle in a third period of time (T₂), which is upstream or downstream of the second period of time (T₁) and which is inserted between the operation of the circulating pump at high speed (nₒ) and hence high pressure and low rotational speed (nᵤ) and hence low pressure, at least at a rotational speed (n₁) which is less than the high rotational speed (nₒ) in the second period of time (T₁), but greater than the low rotational speed (nᵤ) in the first period of time (T₃), and hence generates a liquid pressure which lies between the upper and lower assigned pressure, and wherein the rotational speed (n₁) in the third period of time (T₂) is kept at least at times essentially constant, **characterised in that** the rotational speed (n₁) kept constant in the third period of time (T₂) is selected such that the filling level in the sump (11) remains at an essentially constant level.

2. Process according to claim 1, **characterised in that** during a third period of time (T₂) which is upstream of the second period of time (T₁), the rotational speed is increased abruptly from the rotational speed (n₁) which is lowered with respect to the second period of time to the increased rotational speed (n₀) of the second period of time (T₁).

3. Process according to claim 1 or 2, **characterised in that** during a third period of time (T₂) which is downstream of the second period of time (T₁), the rotational speed is reduced from the increased rotational speed (nₒ) of the second period of time (T₁) abruptly to the rotational speed (n₁) of the third period of time (T₂) which is lowered with respect to the second period of time (T₁).

4. Process according to claim 1, **characterised in that** the third period of time (T₂) comprises a first phase (P₁), in which the circulating pump (7) at a low rotational speed, preferably a rotational speed corresponding to the low rotational speed (nᵤ) of the first period of time (T₃), and a second phase (P₂) at a rotational speed which is increased in contrast.

5. Dishwasher (1) comprising at least one spraying device (3), to which a liquid being collected in a pump sump is supplied via a circulating pump (7) which is driven by an electromotor (8), **characterised by** a program control device (9) designed to carry out the process according to one of claims 1 to 4 and which cooperates with the electromotor (8).

## Revendications

1. Procédé de fonctionnement d'un lave-vaisselle (1) comprenant au moins une installation de projection à laquelle est amené par une pompe de circulation (7) un liquide s'accumulant dans un bassin de pompe, où la pompe de circulation (7) est amenée à fonctionner à l'intérieur d'un cycle de travail par intermittence dans un premier laps de temps (T₃) selon un nombre de tours bas et dans un deuxième laps de temps (T₁) selon un nombre de tours élevé, où durant un cycle de travail, le niveau de liquide dans le bassin de pompe (11) varie en fonction du nombre de tours entre un niveau élevé et un niveau bas, où la pompe de circulation est amenée à fonctionner à l'intérieur d'un cycle de travail durant un troisième laps de temps (T₂) commuté en amont ou en aval du deuxième laps de temps (T₁), qui est inséré entre le fonctionnement de la pompe de circulation à un nombre de tours élevé (n₀) et donc sous pression élevée, et un nombre de tours bas (nᵤ), et donc sous pression basse, selon au moins un nombre de tours (n₁) qui est plus petit que le nombre de tours élevé (nₒ) dans le deuxième laps de temps (T₁) mais plus grand que le nombre de tours bas (nᵤ) dans le premier laps de temps (T₃), et produit ainsi une pression de liquide qui se situe entre la pression supérieure et inférieure associée, et où le nombre de tours (n₁) dans le troisième laps de temps (T₂) est maintenu sensiblement constant au moins par moments, **caractérisé en ce que** le nombre de tours (n₁) maintenu constant est sélectionné dans le troisième laps de temps (T₂) de telle sorte que le niveau de remplissage dans le bassin de pompe (11) reste à un niveau sensiblement constant.

2. Procédé selon la revendication 1, **caractérisé en ce que** dans le cas d'un troisième laps de temps (T₂) commuté en amont du deuxième laps de temps (T₁), le nombre de tours du nombre de tours (n₁) diminué par rapport au deuxième laps de temps est augmenté d'une manière abrupte au nombre de tours augmenté (n₀) du deuxième laps de temps (T₁).

3. Procédé selon l'une des revendications 1 ou 2, **caractérisé en ce que** dans le cas d'un troisième laps de temps (T₂) commuté en aval du deuxième laps de temps (T₁) , le nombre de tours du nombre de tours augmenté (n₀) du deuxième laps de temps (T₁) est réduit d'une manière abrupte au nombre de tours (n₁) du troisième laps de temps (T₂) réduit par rapport au deuxième laps de temps (T₁).

4. Procédé selon la revendication 1, **caractérisé en ce que** le troisième laps de temps (T₂) comprend une première phase (P₁) dans laquelle la pompe de circulation (7) à un nombre de tours réduit, de préférence un nombre de tours correspondant au nombre de tours réduit (nᵤ) du premier laps de temps (T₃), et une deuxième phase (P₂) selon un nombre de tours augmenté par rapport à celui-ci.

5. Lave-vaisselle (1) comprenant au moins une installation de projection (3), à laquelle est amené par une pompe de circulation (7), qui est entraînée par un moteur électrique (8), un liquide s'accumulant dans un bassin de pompe, **caractérisé par** une installation de commande de programme (9) réalisée pour l'exécution du procédé selon l'une des revendications 1 à 4, qui coopère avec le moteur électrique.
